# EUROPÄISCHE PATENTSCHRIFT

(11) **EP 1 189 188 B1**
(45) Veröffentlichungstag und Bekanntmachung des Hinweises auf die Patenterteilung: **26.05.2004**
(21) Anmeldenummer: 01122098.5
(22) Anmeldetag: 14.09.2001
(51) Int. Cl.: G08B 21/00, H04M 11/04

(54) **Notrufmeldeverfahren in einem Kommunikationsnetz**
Emergency call reporting method in a communication network
Procédé pour signaler un appel d'urgence dans un réseau de communication

(30) Priorität: 15.09.2000 DE 10046154
(43) Veröffentlichungstag der Anmeldung: 20.03.2002
(73) Patentinhaber: T-Mobile Deutschland GmbH, 53227 Bonn (DE)
(72) Erfinder: Kunkel, Helmut, 67098 Bad Dürkheim (DE)
(74) Vertreter: Riebling, Peter, Dr.-Ing.

(56) Entgegenhaltungen:
- WO-A-98/08204
- DE-A- 10 004 041
- DE-A- 19 927 217
- US-A- 5 461 390
- US-A- 5 652 570
- US-A- 6 100 806

## Beschreibung

Die Erfindung betrifft ein Notrufmeldeverfahren in einem Kommunikationsnetz.

Bei einem Unfall oder einem anderen Notfall ist es oft wichtig, dass die Möglichkeit des Absetzens eines Notrufes besteht. Meist wird ein Notruf über ein öffentliches Fest- oder Mobilkommunikationsnetz abgesetzt. Das setzt jedoch voraus, dass die betroffene Person in der Lage ist, den Notruf abzusetzen. Bei einem schweren Unfall, einem Überfall oder an abgelegenen Orten ist dies nicht immer gewährleistet und die Möglichkeit für einen Notruf ist unterbunden.

Die Dokumente US 6 100 806 A und US 5 652 570 A offenbaren Verfahren und Einrichtungen zur Überwachung von Personen, insbesondere zur Bestimmung des Standortes von Personen. Hierzu verfügen die Personen über eine mobile Datenübertragungseinrichtung, die mit einer Ortsbestimmungseinrichtung, wie z.B. GPS, ausgerüstet ist. Die mobile Einrichtung überträgt die ermittelten Positionsdaten der Person laufend oder auf Anforderung an eine zentrale Einrichtung, wo sie ausgewertet und weiterverarbeitet werden. Die mobile Einrichtung kann auch weitere Informationen über die Person oder deren Umgebung erfassen und an die zentrale Einrichtung übertragen. So kann die Person z.B. auch einen Notruf an die zentrale Einrichtung absetzen.

Ähnliche Einrichtungen sind aus der WO 98 08204 A und der US 5 461 390 A zu entnehmen.

Bei den bekannten Verfahren geht es in erster Linie um eine automatische Ortsbestimmung zur Überwachung von Personen. Ein Notrufmeldeverfahren mit den Merkmalen der vorliegenden Erfindung ist nicht beschrieben.

Die Aufgabe der Erfindung besteht darin, ein Notrufmeldeverfahren in einem Kommunikationsnetz vorzuschlagen, welches das Absetzen eines Notrufes, und nachfolgend einen gezielten Einsatz von Hilfskräften, insbesondere in besonders ungünstigen Notfallsituationen, sicherstellt.

Diese Aufgabe wird durch die in Patentanspruch 1 angegebenen Merkmale gelöst.
Vorteilhafte Weiterbildungen und Ausführungsformen sind in den abhängigen Patentansprüchen angegeben.

Erfindungsgemäß wird ein neuer Notrufdienst im Kommunikationsnetz vorgeschlagen. In individuell festgelegten Zeitabständen, wird von einer entsprechenden Diensteinstanz, die vorzugsweise im Kommunikationsnetz angesiedelt ist, an das Kommunikationsendgerät ein Kontrollsignal gesendet. Dieses Kontrollsignal ist vom Dienstenutzer in einem bestimmten Zeitrahmen zu bestätigen, z.B. mit einer individuell definierbaren Zahlenkombination als Code. Erfolgt die Bestätigung des Kontrollsignals nicht innerhalb des festgelegten Zeitraumes, wird von der Diensteinstanz automatisch ein Notruf an mindestes eine weitere vorbestimmte Instanz, z.B. Polizei, Rettungsdienst, Feuerwehr etc., abgesendet. Es bedarf der vorherigen Definition durch den Dienstenutzer, welche Instanz durch den Notruf alarmiert werden soll.
Sobald der Notruf veranlasst wurde stellt sich die Frage, wohin sich die alarmierte Instanz begeben soll, um Hilfe leisten zu können. Es muss daher sichergestellt sein, dass der Aufenthaltsort der in Not geratenen Person der Diensteinstanz bzw. der alarmierten Stelle hinreichend genau bekannt ist. Dies wird erfindungsgemäß dadurch erreicht, dass der Standort des Endgerätes bei ausbleibender Bestätigung des Kontrollsignals durch den Dienstenutzer oder nach Ablauf einer vorbestimmten Zeit nach dem Absetzen des Notrufes durch das Kommunikationsnetz automatisch bestimmt wird.
Zur Bestimmung des Aufenthaltsorts durch das Kommunikationssystem sind aus dem Stand der Technik verschiedene Verfahren der Funkpeilung und Signallaufzeitmessung bekannt, deren Funktionsweise hier nicht näher erläutert werden soll.
Vorzugsweise kann der Dienstenutzer selbst definieren, ob direkt eine Ortung eingeleitet werden soll, oder eine Benachrichtigung (Text/Bild/Sprachaufzeichnung) an vorher definierte Empfänger erfolgen soll.

Der erfindungsgemäße Notrufdienst richtet sich besonders an Frauen, Kinder, gesundheitlich eingeschränkte Personen (physisch, neurologisch) und gefährdete Personen, sei es beruflich oder im Rahmen von Freizeitaktivitäten. Der Notrufdienst kann auch als sogenannte elektronische Fußfessel für zu beobachtende oder unter Arrest stehende Personen verwendet werden.

Bei dem verwendeten Kommunikationsnetz handelt es sich vorzugsweise um ein Mobilkommunikationsnetz; bei dem Kommunikationsendgerät um ein Mobilfunkendgerät. Der Dienstenutzer ist Teilnehmer des Mobilkommunikationsnetzes.

In einer bevorzugten Ausführungsform erfolgt die Bestätigung des Kontrollsignals durch den Dienstenutzer durch Eingabe eines individuellen Codes am Endgerät. Diese Code wird über das Kommunikationsnetz an die Diensteinstanz übermittelt. Es ist jedoch auch vorgesehen, dass - z.B. bei defekter Sendeeinrichtung des Kommunikationsendgerätes - die Bestätigung des Kontrollsignals durch Eingabe eines individuellen Codes an einem Kommunikationsendgerät, z.B. einem herkömmlichen Telefon, eines anderen, weiteren Kommunikationsnetzes unter Anwahl einer bestimmten Diensterufnummer, erfolgen kann. Der Code wird dann über das weitere Kommunikationsnetz, z.B. Festtelefonnetz, an die Diensteinstanz übermittelt.

Vorzugsweise wird der Empfang des Kontrollsignals dem Dienstenutzer akustisch und/oder optisch am Kommunikationsendgerät angezeigt. Vorteilhaft erfolgt auch eine Anzeige der verbleibenden Zeit für eine rechtzeitige Übermittlung des Bestätigungssignals.

Eine zusätzliche Möglichkeit der Erfassung des Aufenthaltsortes besteht darin, dass der Dienstenutzer seinen aktuellen oder geplanten (wahrscheinlichen) Aufenthaltsort selbst, z.B. per Spracheingabe oder Kurznachricht SMS, an die Dienstsinstanz übermittelt. Änderungen des Aufenthaltsortes sind natürlich jederzeit möglich.

Insbesondere ein mobiler Dienstenutzer kann auch einmalig, jedoch jederzeit änderbar, ein individuelles Verzeichnis von möglichen Aufenthaltsorten oder Stationspunkten in der Diensteinstanz hinterlegen, wobei jedem Aufenthaltsort oder Stationspunkt eine Kennziffer zugeordnet ist. Der Dienstenutzer setzt bei Empfang eines Kontrollsignals ein Bestätigungssignal an die Diensteinstanz ab, das die jeweilige Kennziffer seines aktuellen Standortes beinhaltet.

Der mobile Dienstenutzer hinterlegt demnach individuell ein Verzeichnis von möglichen Aufenthaltsorten oder Stationspunkten, z.B. zu einer aktuellen oder wiederkehrenden Route, wobei diese Stationspunkte im einfachsten Fall nummeriert sind.
Hält sich der Dienstenutzer vorzugsweise permanent an einem bestimmten Ort auf, so kann er vor dem Einschalten des Dienstes der Diensteinstanz die dem Aufenthaltsort entsprechende Kennziffer mitteilen.
Bewegt sich der Dienstenutzer entlang der durch die Stationspunkte vorgegebenen Route, so muss er bei Empfang des zu bestätigenden Kontrollsignals die dem jeweiligen Aufenthaltsort entsprechende, aktuelle (nächstliegende) Kennziffer eingeben.

Vor der automatischen Standortbestimmung durch das Kommunikationsnetz kann vorzugsweise ein Sondersignal an das Endgerät übermittelt werden, das vom Dienstenutzer mit einem bestimmten Code bestätigt werden kann, um die Standortbestimmung zu verhindern.
Generell kann zur Vermeidung eines Fehlalarms, z.B. bei Funkschatten, bei vergessenem Bestätigungscode oder bei versehentlichem Ausschalten des Endgerätes (somit keine Bestätigung des Signals möglich) vorgesehen sein, dass die automatische Standortbestimmung innerhalb einer bestimmten Zeitpanne durch Übermitteln eines bestimmten Codes an die Diensteinstanz verhindert werden kann.

Es kann ferner vorgesehen sein, dass die automatische Standortbestimmung vom Dienstenutzer jederzeit selbst initiierbar ist, indem eine bestimmte Taste am Kommunikationsendgerät betätigt wird und dadurch eine Standortbestimmung ausgelöst wird oder aber das Loslassen einer bestimmten Taste die Ortung auslöst.

Zur Erleichterung einer automatischen Ortung kann durch den Dienstenutzer zuvor ein Gebiet / Bereich definiert werden, wo die Ortung erfolgversprechend erscheint. Die letzte verfügbare Standortinformation wird bei Alarm als vorläufiger Bestimmungsort herangezogen.

Die Standortbestimmung geht also aus von dem letzten feststellbaren Aufenthaltsort des Endgerätes, und falls möglich dem vom Kommunikationsnetz festgestellten aktuellen Aufenthaltsort des Endgerätes.
Die Standortbestimmung kann durch Extrapolieren, d.h. Ermittlung der letzten Aufenthaltsorte, prüfen auf lineares Verhalten, Erstellen zeitliche Relation und Prognose des aktuellen Aufenthaltsorts verfeinert werden.

Als Optionen und Zubehör kann ein zusätzlicher Funksignalgeber vorgesehen sein, an welchen das Kontrollsignal vom Endgerät übermittelt wird. Dies ist sinnvoll, falls das Endgerät nicht personengebunden verbleibt.

Zusätzlich kann eine Art "Crash-Sensor" am Endgerät vorgesehen sein, der ein automatisches Auslösen der Alarmgebung bei plötzlichem Totalausfall des Endgerätes (Mutwillige Zerstörung, Unfall) einleitet.

## Patentansprüche

1. Notrufmeldeverfahren in einem Kommunikationsnetz, mit den Schritten:
- Aktivieren eines Notrufdienstes durch den Dienstenutzer bei einer Diensteinstanz,
- fortwährendes Übermitteln eines Kontrollsignals durch die Diensteinstanz über ein Kommunikationssystem an ein Kommunikationsendgerät des Dienstenutzers in festgelegten zeitlichen Abständen,
- automatisches Absetzen eines Notrufes durch die Diensteinstanz zu mindestens einer vorherbestimmten Instanz, sobald der Empfang des Kontrollsignals nicht innerhalb eines vorbestimmten Zeitraumes vom Dienstenutzer gegenüber der Diensteinstanz bestätigt wurde, und
- automatische Bestimmung des Standortes des Endgerätes durch das Kommunikationsnetz bei ausbleibender Bestätigung des Kontrollsignals durch den Dienstenutzer oder nach Ablauf einer vorbestimmten Zeit nach dem Absetzen des Notrufes.

2. Verfahren nach Anspruch 1, **dadurch gekennzeichnet, dass** als Kommunikationsnetz ein Mobilkommunikationsnetz und als Endgerät ein Mobilfunkendgerät verwendet wird.

3. Verfahren nach einem der Ansprüche 1 oder 2, **dadurch gekennzeichnet, dass** die Bestätigung des Kontrollsignals durch Eingabe eines individuellen Codes am Endgerät und Übermittlung des Codes an die Diensteinstanz erfolgt.

4. Verfahren nach einem der Ansprüche 1 oder 2, **dadurch gekennzeichnet, dass** die Bestätigung des Kontrollsignals durch Eingabe eines individuellen Codes an einem Endgerät eines weiteren Kommunikationsnetzes und eine Übermittlung des Codes über das weitere Kommunikationsnetz an die Diensteinstanz erfolgt.

5. Verfahren nach einem der vorhergehenden Ansprüche, **dadurch gekennzeichnet, dass** der Empfang des Kontrollsignals dem Dienstenutzer akustisch und/oder optisch angezeigt wird.

6. Verfahren nach einem der vorhergehenden Ansprüche, **dadurch gekennzeichnet, dass** dem Dienstenutzer die verbleibende Zeit für eine rechtzeitige Übermittlung des Bestätigungssignals am Endgerät angezeigt wird.

7. Verfahren nach einem der vorhergehenden Ansprüche, **dadurch gekennzeichnet, dass** der Dienstenutzer der Diensteinstanz seinen aktuellen oder wahrscheinlichen Aufenthaltsort mitteilt.

8. Verfahren nach einem der vorhergehenden Ansprüche, **dadurch gekennzeichnet, dass** der Dienstenutzer einmalig jedoch jederzeit änderbar ein individuelles Verzeichnis von möglichen Aufenthaltsorten oder Stationspunkten in der Diensteinstanz hinterlegt, wobei jedem Aufenthaltsort oder Stationspunkt eine Kennziffer zugeordnet ist, und der Dienstenutzer bei Empfang eines Kontrollsignals ein Bestätigungssignal an die Diensteinstanz absetzt, das die jeweilige Kennziffer seines aktuellen Standortes beinhaltet.

9. Verfahren nach einem der vorhergehenden Ansprüche, **dadurch gekennzeichnet, dass** vor einer automatischen Standortbestimmung durch das Kommunikationsnetz ein Sondersignal an das Endgerät übermittelt wird, das vom Dienstenutzer mit einem bestimmten Code bestätigt werden muss, um die Standortbestimmung zu verhindern.

10. Verfahren nach einem der vorhergehenden Ansprüche, **dadurch gekennzeichnet, dass** die automatische Standortbestimmung vom Dienstenutzer jederzeit selbst initiierbar ist.

11. Verfahren nach einem der vorhergehenden Ansprüche, **dadurch gekennzeichnet, dass** bei nicht bestätigtem Kontrollsignal die automatische Standortbestimmung innerhalb einer bestimmten Zeitpanne durch Übermitteln eines bestimmten Codes an die Diensteinstanz verhindert werden kann.

12. Verfahren nach einem der vorhergehenden Ansprüche, **dadurch gekennzeichnet, dass** unabhängig von einem ausgelösten Notruf permanent oder in bestimmten Intervallen eine Standortbestimmung durchgeführt wird.

13. Verfahren nach einem der vorhergehenden Ansprüche, **dadurch gekennzeichnet, dass** ein Abgleich/Vergleich des vom Dienstenutzer vorgegebenen Aufenthaltsortes mit dem vom Kommunikationsnetz ermittelten Aufenthaltsort erfolgt.

14. Verfahren nach Anspruch 13, **dadurch gekennzeichnet, dass** bei Feststellen einer Abweichung zwischen dem vorgegebenen und dem ermittelten Aufenthaltsort bestimmte Folgeprozesse, wie das Versenden eines Sondersignals, ausgelöst werden.

## Claims

1. Emergency call reporting method in a communications network, with the steps of:
- activation of an emergency call service by the service user at a service centre,
- continuous transmission of a control signal by the service centre via a communications system to a communications terminal of the service user at fixed intervals of time,
- automatic transmission of an emergency call by the service centre to at least one predetermined centre as soon as reception of the control signal has not been acknowledged within a predetermined length of time by the service user to the service centre, and
- automatic determination of the position of the terminal by the communications network if there is no acknowledgement of the control signal by the service user or at the end of a predetermined time after transmission of the emergency call.

2. Method according to claim 1, **characterised in that** a mobile communications network is used as the communications network and a mobile radio terminal is used as the terminal.

3. Method according to one of claims 1 or 2, **characterised in that** acknowledgement of the control signal is effected by entry of an individual code at the terminal and transmission of the code to the service centre.

4. Method according to one of claims 1 or 2, **characterised in that** acknowledgement of the control signal is effected by entry of an individual code at a terminal of a further communications network and transmission of the code via the further communications network to the service centre.

5. Method according to one of the preceding claims, **characterised in that** reception of the control signal is indicated to the service user acoustically and/or optically.

6. Method according to one of the preceding claims, **characterised in that** the remaining time for transmission of the acknowledge signal in time is indicated to the service user at the terminal.

7. Method according to one of the preceding claims, **characterised in that** the service user of the service centre conveys his current or probable location.

8. Method according to one of the preceding claims, **characterised in that** the service user deposits an individual list of possible locations or station points at the service centre once, but so that it can be varied at any time, each location or station point being assigned a code number, and upon reception of a control signal the service user transmits an acknowledge signal to the service centre, which contains the respective code number of his current location.

9. Method according to one of the preceding claims, **characterised in that**, before automatic determination of the position by the communications network, a special signal is sent to the terminal, which must be acknowledged by the service user with a given code to prevent determination of the position.

10. Method according to one of the preceding claims, **characterised in that** automatic determination of the position can be initiated by the service user himself at any time.

11. Method according to one of the preceding claims, **characterised in that**, if a control signal is not acknowledged, automatic determination of the position can be prevented within a given period of time by transmission of a given code to the service centre.

12. Method according to one of the preceding claims, **characterised in that**, irrespective of an activated emergency call, determination of the position is carried out permanently or at given intervals.

13. Method according to one of the preceding claims, **characterised in that** adjustment/comparison of the location preset by the service user with the location determined by the communications network is effected.

14. Method according to claim 13, **characterised in that**, upon detection of a deviation between the preset and the determined location, certain consequent processes such as the sending of a special signal are activated.

## Revendications

1. Procédé pour signaler un appel d'urgence dans un réseau de communication, comprenant les étapes suivantes :
- activation d'un service d'appels d'urgence par l'utilisateur du service auprès d'une instance du service,
- transmission continuelle d'un signal de contrôle par l'instance du service, par l'intermédiaire d'un système de communication, à un terminal de communication de l'utilisateur du service, à intervalles définis,
- transmission automatique d'un appel d'urgence par l'instance du service à au moins une instance définie au préalable, dès que la réception du signal de contrôle n'a pas été confirmée par l'utilisateur du service auprès de l'instance du service à l'intérieur d'un laps de temps prédéfini, et
- localisation automatique du terminal par le réseau de communication en l'absence de confirmation du signal de contrôle par l'utilisateur du service ou après écoulement d'une certaine durée après la transmission de l'appel d'urgence.

2. Procédé selon la revendication 1, **caractérisé en ce qu'**on utilise comme réseau de communication un réseau de communication mobile, et comme terminal un.terminal mobile.

3. Procédé selon la revendication 1 ou 2, **caractérisé en ce que** la confirmation du signal de contrôle se fait grâce à l'entrée d'un code individuel sur le terminal et à la transmission du code à l'instance du service.

4. Procédé selon la revendication 1 ou 2, **caractérisé en ce que** la confirmation du signal de contrôle se fait grâce à l'entrée d'un code individuel sur un terminal d'un autre réseau de communication, et à une transmission du code par cet autre réseau à l'instance du service.

5. Procédé selon l'une des revendications précédentes, **caractérisé en ce que** la réception du signal de contrôle est signalée à l'utilisateur du service par voie acoustique et/ou optique.

6. Procédé selon l'une des revendications précédentes, **caractérisé en ce que** le temps qu'il reste pour transmettre à temps le signal de confirmation est indiqué à l'utilisateur du service sur le terminal.

7. Procédé selon l'une des revendications précédentes, **caractérisé en ce que** l'utilisateur du service communique à l'instance du service sa position momentanée ou probable.

8. Procédé selon l'une des revendications précédentes, **caractérisé en ce que** l'utilisateur du service dépose auprès de l'instance du service, une seule fois mais avec la possibilité de la modifier à tout moment, une liste individuelle de positions ou de points de station possibles, un indicatif étant associé à chaque position ou point de station et l'utilisateur du service transmettant à l'instance du service, à réception d'un signal de contrôle, un signal de confirmation qui contient l'indicatif de sa position momentanée.

9. Procédé selon l'une des revendications précédentes, **caractérisé en ce que**, avant une localisation automatique par le réseau de communication, un signal spécial est transmis au terminal, signal que l'utilisateur du service doit confirmer avec un code défini, pour empêcher la localisation.

10. Procédé selon l'une des revendications précédentes, **caractérisé en ce que** la localisation automatique peut être déclenchée à tout moment par l'utilisateur du service lui-même.

11. Procédé selon l'une des revendications précédentes, **caractérisé en ce que** si un signal de contrôle n'est pas confirmé, la localisation automatique peut être empêchée à l'intérieur d'un laps de temps défini, grâce à la transmission d'un code défini à l'instance du service.

12. Procédé selon l'une des revendications précédentes, **caractérisé en ce qu'**une localisation est effectuée en permanence ou à intervalles définis, indépendamment d'un appel d'urgence déclenché.

13. Procédé selon l'une des revendications précédentes, **caractérisé en ce qu'**un ajustage/une comparaison entre la position prédéfinie par l'utilisateur et la position déterminée par le réseau de communication a lieu.

14. Procédé selon la revendication 13, **caractérisé en ce que** si un écart est constaté entre la position prédéfinie et la position déterminée, des opérations de poursuite définies telles que l'envoi d'un signal spécial sont déclenchées.
